# EUROPEAN PATENT SPECIFICATION

(11) **EP 4 130 913 B1**
(45) Date of publication and mention of the grant of the patent: **11.06.2025**
(21) Application number: 22184662.9
(22) Date of filing: 13.07.2022
(51) Int. Cl.: G05B 23/02

(54) **A METHOD OF MONITORING THE CONDITION OF A MOVABLE MEMBER IN A LINEAR MOTOR SYSTEM, CORRESPONDING LINEAR MOTOR SYSTEM, FORMING ASSEMBLY AND COMPUTER PROGRAM PRODUCT**
VERFAHREN ZUR ÜBERWACHUNG DES ZUSTANDS EINES BEWEGLICHEN ELEMENTS IN EINEM LINEARMOTORSYSTEM, ENTSPRECHENDES LINEARMOTORSYSTEM, FORMGEBENDE ANORDNUNG UND COMPUTERPROGRAMMPRODUKT
PROCÉDÉ DE SURVEILLANCE DE L'ÉTAT D'UN ÉLÉMENT MOBILE DANS UN SYSTÈME DE MOTEUR LINÉAIRE, SYSTÈME DE MOTEUR LINÉAIRE CORRESPONDANT, ENSEMBLE DE FORMATION ET PRODUIT PROGRAMME INFORMATIQUE

(30) Priority: 05.08.2021 EP 21189791
(43) Date of publication of application: 08.02.2023
(73) Proprietor: Tetra Laval Holdings & Finance S.A., 1009 Pully (CH)
(72) Inventor: Caltabiano, Daniele, 41124 Modena (IT)
(74) Representative: Tetra Pak - Patent Attorneys SE

(56) References cited:
- EP-A1- 3 628 605

## Description

### Technical Field

The present invention relates to linear motor systems comprising one or more tracks and movable members coupled thereto and a method for monitoring the condition of such movable members. The linear motor system according to the instant invention may be used in industrial applications, e.g. in a forming assembly for forming a plurality of objects such as a packaging assembly configured to form and seal a plurality of packs containing pourable products, in particular pourable food products.

### Background Art

Linear motor systems are known and used in industrial applications to improve efficiency and flexibility. Such linear motor systems comprise a plurality of movable members movable, independently from each other, on one or more tracks. For example, the linear motor system comprises independent carts movable along a racetrack.

For example, it is known the use of forming assemblies such as packaging assemblies comprising a plurality of movable members movable independently from each other on tracks and configured to form and/or seal objects such as packages made of sterilized packaging material configured to receive pourable food products, such as fruit juice, UHT (ultra-high temperature-treated) milk, wine, tomato sauce, etc.

These packages are normally produced in fully automatic packaging assemblies, in which a continuous tube is formed from a web of packaging material fed to such packaging assembly. To obtain the final package, the web is folded and sealed longitudinally to form the tube, which is fed along a vertical advancing direction. The tube is then filled with the sterilized food product from above and is sealed and subsequently cut along equally spaced transversal cross sections.

Although being functionally valid, the known linear motor systems are still open to further improvement. For example, a need is felt for monitoring the condition of the movable members in the linear system, e.g. the condition of a coupling of the movable member to the track and/or a condition of the elements that are relatively movable with respect to the movable member.

By condition, the instant description intends the state of a movable member or an element thereof with regard to its appearance, quality, or working order.

This way, the correct operation of the movable member along its entire life is facilitated. In fact, like every mechanical system, all the components are affected by mechanical plays that, during the time, can decrease the overall stiffness and therefore the repeatability of the whole system. Accordingly, in a forming assembly, a need is felt to detect premature degradation of performance, e.g. for allowing a machine operator to take corrective actions before a forming error or an issue on sterility occurs. Document EP 3628605A1 may be of interest for the instant description.

### Summary of the invention

It is therefore an object of the present invention to provide a method of monitoring a condition, e.g. the state and/or quality and/or working order, of a movable member in a linear motor system which can facilitate achieving one or more of the above-mentioned needs in a straightforward and low-cost manner. Such an object is achieved by means of a method and a corresponding linear motor system having the features set forth in the claims that follow.

Such an object may be achieved by means of a forming assembly for forming one or more objects, e.g. a packaging assembly for forming and sealing a plurality of packs, the forming assembly comprising a linear motor system according to one or more embodiments.

Such an object may be achieved by means of a computer program product loadable in the memory of at least one electronic control unit, e.g. a system control and/or processing unit and/or a processing unit of a movable member, and comprising software code portions for performing the steps of the method according to one or more embodiments.

The disclosed embodiments may achieve one or more advantages, e.g.:
- the condition of the movable members and/or relatively movable parts thereof can be monitored during the life of the linear motor system,
- such monitoring may facilitate reducing handling of defective products, and/or
- faults or damages in the mechanical moving parts, e.g. due to play gained over time or stuck components, can be detected in an early phase.

Play in mechanical systems may affect the forming performances lowering the repeatability and the accuracy of the overall forming process. If not monitored, such play may lead to forming defects.

### Brief description of the drawings

Embodiments of the present invention will be described by way of example with reference to the accompanying drawings, in which:
- figure 1 is a schematic illustration of a linear motor system according to one or more embodiments,
- figure 2 is a non-limiting example of a possible vibration applied on the movable member of a linear motor system,
- figure 3 is a schematic illustration of a measured response in frequency of the movable member, and
- figure 4 exemplifies a schematic front view, with parts removed for clarity, of a packaging assembly for forming a plurality of sealed packs according to the present invention.

### Description of the invention

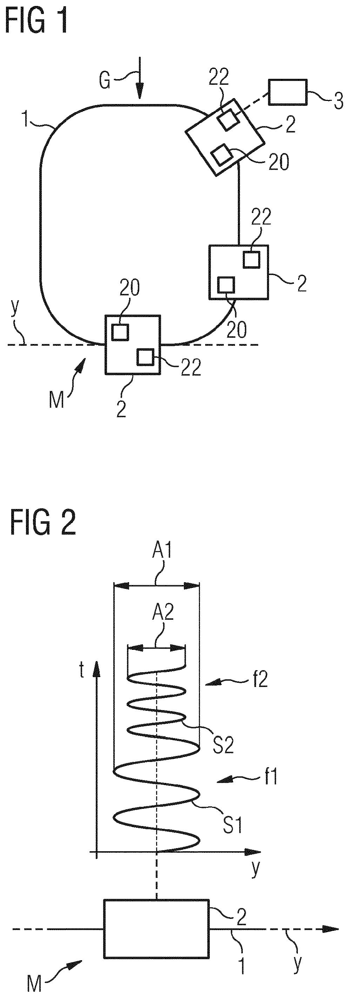

Figure 1 illustrates an example of a linear motor system according to one or more embodiments. Permanent magnets arrangements and coils - i.e. movable members and a respective track - define such type of linear motors, which, in a known manner, are configured to independently control the movement of the movable members along the respective track. The track may comprise a single rail or a plurality of rails. The rails can be closed in a racetrack configuration, as exemplified in figure 1, or they may be open.

The linear motor system comprises one or more tracks 1, e.g. a single track for simplicity in fig. 1, and one or more movable members 2, preferably movers or carts, coupled to the track 1 and configured to move along the respective track 1. In figure 1, the movable members 2 race along the track 1 in a first direction X exemplified by the arrow. For example, the track 1 defines an endless path on which the movable members 2 are configured to move cyclically.

The linear motor system further comprises a system control and processing unit 3 configured to position the movable member 2 at a monitoring region M of the track 1 and apply vibration to the movable member 2. The system control and processing unit 3 may be positioned at the track 1. The movable members 2 in the system may comprise respective processing units 20 that may be coupled, e.g. wirelessly, to the system control and processing unit 3.

For example, the processing unit 20 in the movable member 2 may be configured to transmit data to the system control and/or processing unit 3 at each cycle, when the respective movable member 2 passes thereat. The transmission of data between the movable members 2 and the system control and/or processing unit 3 may occur by means of (e.g. low-energy) wireless transmission modules, e.g. Bluetooth low-energy transmission modules.

For example, the monitoring region M may comprise a linear region, e.g. a plateau, of the track 1 extending in a second direction Y perpendicular to a gravity acceleration direction G.

For example, the monitoring region may be a region where the movable member 2 would lie if no force was applied on the movable member 2 by the linear motor system, e.g. by means of the magnetic coils. In other words, as exemplified in figure 1, the monitoring region M may be the region at the bottom of the track 1. In addition or in alternative, the monitoring region M may be at the top of the track 1.

The movable members 2 further comprises one or more vibration sensors 22 configured to detect a response of the respective movable members 2 to the vibration applied thereon. The vibration sensors 22 may be positioned on the movable members 2.

The processing unit 3 and/or 20 may be configured to identify, e.g. at an early stage, faults or errors as a function of the response to the vibration measured by the one or more vibration sensors 22.

If a fault or error is identified, the processing unit 3, 20 may be configured to:
- generate an alert, e.g. indicative of the detected error, and/or
- prevent operation of the movable members 2.

The linear motor system may comprise a user interface configured to show the alarm signal.

In one or more embodiments, the vibration sensors 22 may comprise at least one inertial sensor, preferably comprising one or more motion sensor, e.g. (3D) accelerometers, and/or one or more rotation sensors, such as (3D) gyroscopes. A measure of the inertial sensors may be indicative of an acceleration of the movable member 2. The vibration may be detected based on such measure.

In addition or in alternative, the vibration sensors 22 may comprise a position error sensor and/or a torque sensor.

For example, the vibration sensor 22 may be potted with epoxy resin and fixed to the movable member 2. Advantageously, this way the inertial sensors may become virtually water and shock proof.

One or more embodiments may thus relate to a method of monitoring a condition, e.g. the state and/or quality and/or working order, of a movable member in a linear motor system as described previously. The method comprises:
- positioning the movable member at the monitoring region M of the track 1, e.g. a plateau at the bottom of the track 1 as exemplified in figure 1,
- applying vibration, e.g. one or more vibrations at different frequencies, to the movable member 2, and
- detecting a response of the movable member 2 to the vibration by means of the vibration sensor 22.

As exemplified in figure 2, the step of applying vibration to the movable member 2 comprises applying one or more predetermined (e.g. sinusoidal) motion profiles S1, S2 to the movable member 2. The motion profiles may comprise for example sinusoids S1, S2 having predetermined frequencies f1, f2 and/or amplitudes A1, A2, that may vary over time.

For the sake of ease of understanding, the motion profile exemplified in the figures is a sinusoidal motion profile, however it may be possible to apply different, more complex motion profiles with a higher frequency content.

Figure 2 exemplifies a motion profile of a movable member 2 along time t being subjected to a periodic oscillation having first frequency f1 and afterwards second frequency f2, different from the first frequency. In addition or in alternative, the motion profile may comprise sinusoids having a first amplitude A1 and a second amplitude A2, respectively, with the second amplitude being different from the first amplitude A1.

In one or more embodiments, the method may comprise applying a plurality of vibrations to the movable member 2, the vibrations having different frequencies, preferably between 0.5 Hz and 200 Hz. The method may thus comprise applying a (e.g. sinusoid) motion profile to the movable member 2, wherein the motion profile may comprise one or more frequencies f1, f2, preferably comprised between 0.5 Hz and 200 Hz. This way, a frequency sweep may be performed with a plurality of different frequencies. In other words, a plurality of vibrations having each a different frequency may be applied to the movable member 2.

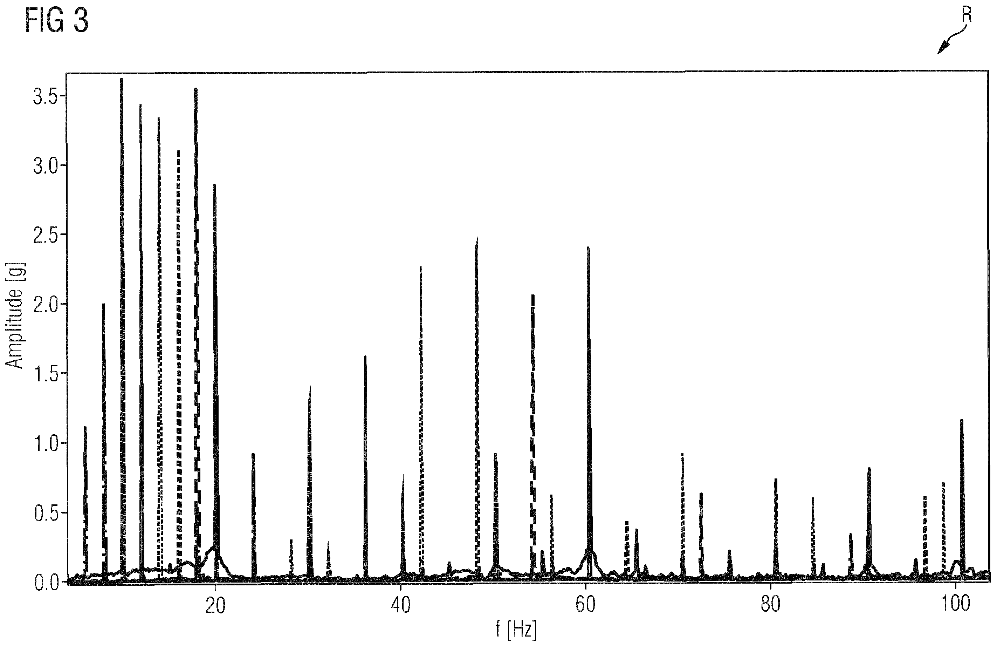

Figure 3 exemplifies a measure of the response R to the vibration applied to the movable member 2. In particular, the measure comprises an amplitude A of a resonance of the movable member 2 with respect to a frequency f. That is, one or more vibrations at different frequencies may be applied to the movable member 2 and a response R thereof over the frequency domain f may be measured and plotted.

The method may comprise:
- comparing the response R detected, e.g. the response R plotted in figure 3, to a predetermined vibration pattern, and
- checking whether the response R differs from the predetermined vibration pattern, and
- if the response R substantially corresponds to the predetermined vibration pattern, resuming operation of the movable member 2.

The predetermined vibration patter may comprise a predetermined healthy state frequency pattern or a mathematical/theoretical model.

At installation, the vibration may be applied to each movable member 2 to determine the predetermined vibration pattern. In other words, the method may comprise calibrating the movable member 2 at installation by applying one or more vibrations, e.g. a frequency sweep, to the movable member 2 to generate the predetermined vibration pattern. In addition or in alternative, the predetermined vibration pattern may be based on a standard response of movable members 2 of a specific type to vibration.

The step of checking whether the response R differs from the predetermined vibration pattern may comprise checking whether new resonances are plotted, e.g. a new amplitude A is plotted at a frequency f that is not present at said frequency f in the predetermined vibration pattern. In addition or in alternative, the step of checking whether the response R differs from the predetermined vibration pattern may comprise checking whether the resonances plotted differ of more than a predetermined amount with respect to the predetermined vibration pattern, e.g. one or more amplitudes A change of more than a predetermined amount at certain frequencies f with respect to amplitudes A at said certain frequencies f in the predetermined vibration pattern.

Accordingly, the response R substantially corresponds to the predetermined vibration pattern if the amplitude A changes non-negligibly. In other words, the response R substantially corresponds to the predetermined vibration pattern if the amplitude A changes within a predetermined amount with respect to the predetermined vibration pattern. This way, it is possible to monitor the condition of the movable member 2 also considering the noise that may occur due to the measurement of the vibration.

If the response R substantially corresponds, the method may comprise resuming operation of the movable member 2. If a plurality of movable members 2 are present, the measuring of the condition may be applied on all movable members 2 before resuming normal operation.

If one or more movable members 2 show that the response R does not substantially correspond to the predetermined vibration pattern, the method may comprise transmitting an alert to a user interface and/or preventing resumption or further operation of the movable members 2.

In one or more embodiments, the method may be applied periodically. That is, the method may comprise periodically interrupting operation of the linear motor system to monitor the condition of the movable members 2. For example, normal operation of the linear motor system may be interrupted every 500 hours to monitor the condition of the movable members 2.

Advantageously, the method according to one or more embodiments allows a precise monitoring of the condition of the movable members 2 and parts thereof. For example, during operation, one or more elements of the movable members 2 may be configured to move relatively with respect to a body of the movable member 2. Such movement, over time, may create play and/or degradation of the movable elements. Such play and/or degradation may be detected by means of studying the frequency response of the movable members 2 to vibration. In fact, the play and/or degradation may generate new/different movements when the movable members 2 are solicitated.

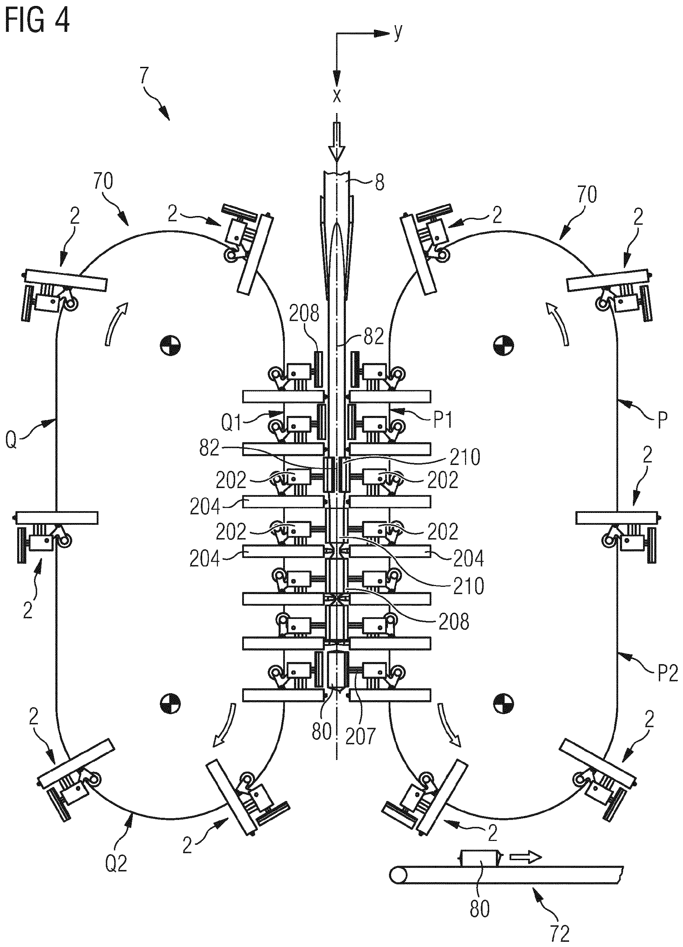

One or more embodiments, as illustrated in figure 4, refer to a forming assembly 7 configured to form one or more objects 80. In the following, a non-limiting example of a packaging assembly 7 is depicted, configured to form and seal a plurality of packs 80 containing a pourable product, preferably a pourable food product, starting from a tube 8 of packaging material. Whereas hereinafter reference is made to a packaging assembly 7, it will be appreciated that such is merely a non-limiting example for the ease of understanding and conciseness. Different types of forming assemblies 7 can exist that are not packaging assemblies. All features described in the following, even though related to a packaging assembly 7, can apply more in general to the forming assembly 7.

A tube 8 is formed in known manner by longitudinally folding and sealing a web (not shown) of packaging material. Tube 8 is then filled from above by a pipe (not shown) with the pourable product and is fed through packaging assembly 7 along a straight advancing direction X. In detail, tube 8 extends along a straight longitudinal, e.g. vertical, axis parallel to direction X.

The forming assembly 7, e.g. the packaging assembly 7, comprises a linear motor system according to one or more embodiments as described previously. Packaging assembly 1 comprises:
- a pair of conveyors 70 arranged on respective lateral sides of tube 8, spaced apart with respect to one another, and configured to cooperate with tube 8; and
- an outlet conveyor 72, which is arranged below conveyors 70 staggered with respect to axis X.

Each conveyor 70 substantially comprises the endless track 1 and a plurality of movable members 2, preferably movable members, coupled to, and cyclically movable along, one respective track 1. Each movable member 2 is configured to cyclically slide along track 1 of the respective conveyor 70. A plurality of movable members 2 slides, in use, along each track 1.

The forming assembly, e.g. the packaging assembly 7, thus comprises:
- a pair of endless tracks 1 between which the tube 8 is fed along the (e.g. straight) advancement direction X;
- a pair of movable members 2, each one of which movably coupled to, and cyclically movable along, one respective track 1,
- a processing unit 3 configured to position the movable member at a monitoring region M of the track 1 and apply vibration to the movable member 2.

The movable member 2 comprises a vibration sensor 22 configured to detect a response of the movable member 2 to the vibration applied thereon.

As illustrated in figure 9, the two tracks 1 define respective endless paths P, Q arranged on opposite sides of the tube 8. More specifically, paths P, Q comprise:
- respective operative branches P1, Q1, preferably rectilinear, between which tube 8 is fed and along which movable members 2 cooperate with tube 8; and
- respective return branches P2, Q2, along which movable members 2 are detached from tube 8.

According to this preferred embodiment shown, paths P, Q are substantially oval-shaped.

In use, when sliding along the respective operative branch P1, Q1, each movable member 2 cooperates with a corresponding movable member 2 - i.e. movable members 2 mutually cooperates two by two - defining in this way a pair of movable members 2 facing each other and cooperating with one another and with tube 8 while sliding along operative branches P1, Q1.

Each pair of movable members 2 is configured to cooperate with tube 8 to cyclically form and seal one respective pack 80 at a time, and cut the pack 80 to separate the pack 80 from tube 8, as shown in figure 4.

To this end, each movable member 2 comprises, at one of its sides, a forming unit 202 and a sealing unit 204 both configured to cooperate with tube 8 along the respective operative branches P1, Q1.

The forming units 202 are configured to respectively cooperate with tube portions 82 of tube 8 to form at least corresponding pack portions, more in particular corresponding packs 80. For this purpose, each forming unit 202 is carried by, preferably mounted on, the respective movable member 2 in a movable manner. The forming unit 202 may preferably comprise a half-shell, presenting a C-shaped cross section and comprising a back wall 208 and a pair of lateral flaps 210. In the embodiment shown, flaps 210 are movably coupled to wall 208. The flaps 210 project from opposite lateral edges of wall 208 when movable members move along operative branches P1, Q1, and are hinged to such edges.

In use, the half-shell of each forming unit 202 is configured to sequentially and cyclically cooperate in contact with tube portions 82 so as to form at least pack portions of respective packs 80.

Each half-shell is linearly movable transversally, e.g. orthogonally, to direction X, i.e. along direction Y, towards tube 8, i.e. towards the tube portion 82 that half-shell has to form. Each forming unit 202 comprises a movable element 207 linearly movable along direction Y, which carries a respective half shell.

Sealing units 204 are configured to cooperate with tube 8 to seal tube portions 82 at predetermined, equally spaced, successive cross sections crosswise to direction X. Furthermore, sealing units 204 are configured to cooperate with tube 8 to cut packs 80 at the cross sections, to separate packs 80 from one another.

On one side, each sealing unit 204 is mounted downstream of the corresponding forming unit 202 of the respective movable member 2 along the respective path P, Q and comprises a counter-sealing device and an extractable cutting element, for example a knife (not illustrated). On the other side, each sealing unit 204 is mounted downstream of the corresponding forming unit 202 of the respective movable member 2 along the respective path P, Q and comprises a sealing device and a seat, adapted to receive the knife of the corresponding sealing device configured to cooperate with such counter-sealing device. Sealing devices may comprise ultrasonic, induction or inductive heating sealing devices.

As shown in figures 9, when forming units 202 and sealing units 204 are advanced by the respective movable members 2 along the respective operative branch P1, Q1, the respective half-shells, sealing devices and counter-sealing devices move back and forth along a direction Y between:
- a closed position, or operative position, in which half-shells, sealing devices and counter-sealing devices cooperate with respective tube portions 82 to form, seal and cut respective packs 80; and
- an open position, or idle position, in which half-shells, sealing devices and counter-sealing devices are detached from tube 8 or from the formed packs 80.

When half-shells are in the operative (closed) position, flaps 210 of each half-shell rotate about the respective hinges, e.g. about an axis parallel to direction X, from a position in which they diverge from the respective wall 208, to a position in which they are substantially orthogonal to the wall 208, face flaps 210 of the other half-shell carried by the corresponding movable member 2 of the same pair and contact tube 8 to completely surround the respective tube portion 82 destined to form the respective pack 80.

When two half-shells of two respective forming units 202 of a pair of cooperating movable members 2 are both in the operative (closed) position, they define a substantially prismatic cavity and accordingly control the volume and shape of one respective pack 80 being formed.

When the counter-sealing device and sealing device of a pair of cooperating movable members 2 are in the operative (closed) position, they cooperate with one another to heat-seal tube 8, so as to form a top sealing band and a bottom sealing band. Then, the respective cutting element is extracted, so as to cut packs 80 between the top and bottom sealing band of two adjacent packs 80 and separate formed packs 80 from one another.

As exemplified in figure 9, a further movement occurs along direction X, between the sealing unit 204 and the forming unit 202, to form a top and/or bottom of the packs 80.

## Claims

1. A method of monitoring a condition of a movable member (2) in a linear motor system comprising a track (1) and at least one movable member (2) coupled to the track (1) and configured to move along said track (1), the movable member (2) comprising a vibration sensor (22) thereon, the method comprising:
- positioning the movable member (2) at a monitoring region (M) of the track (1),
- applying vibration to the movable member (2), and
- detecting a response (R) of the movable member (2) to the vibration by means of the vibration sensor (22),
the method being **characterized in that** the step of applying vibration to the movable member (2) comprises applying a predetermined motion profile (S1, S2) to the movable member (2).

2. The method of claim 1, comprising:
- comparing the response (R) detected to a predetermined vibration pattern, and
- checking whether the response (R) differs from the predetermined vibration pattern, and
- if the response (R) substantially corresponds to the predetermined vibration pattern, resuming operation of the movable member (2).

3. The method of claim 2, comprising, if the response (R) fails to substantially correspond to the predetermined vibration pattern, transmitting an alert to a user interface and/or preventing resumption operation of the movable member (2).

4. The method of any of claim 1 to 3, wherein the predetermined motion profile (S1, S2) is a sinusoidal motion profile (S1, S2).

5. The method of any of the previous claims, wherein the monitoring region (M) comprises a linear region of the track (1) extending in a direction perpendicular to a gravity acceleration direction (G).

6. The method of any of the previous claims, comprising applying a plurality of vibrations to the movable member (2), the vibrations having different frequencies (f1, f2), preferably between 0.5 Hz and 200 Hz.

7. The method according to any of the previous claims, comprising periodically interrupting operation of the linear motor system to monitor the condition of the movable member (2).

8. The method of any of the previous claims, comprising calibrating the movable member (2) at installation by applying at least a vibration to the movable member (2) to generate the predetermined vibration pattern.

9. A computer program product loadable in the memory of at least one electronic control unit (3, 22) and comprising software code portions for performing the steps of the method of any of claims 1 to 8.

10. A linear motor system, comprising:
- a track (1),
- at least one movable member (2) coupled to the track (1) and configured to move along said track (1),
- a processing unit (3) configured to position the movable member at a monitoring region (M) of the track (1) and apply vibration to the movable member (2), wherein the applied vibration comprises a predetermined motion profile (S1, S2),
wherein the movable member (2) comprises a vibration sensor (22) configured to detect a response of the movable member to the vibration applied thereon.

11. The linear motor system of claim 10, wherein the monitoring region (M) comprises a region, preferably linear, where the movable member (2) would lie if no force was applied on the movable member (2) by the linear motor system.

12. The linear motor system of claim 10 or claim 11, wherein the vibration sensor (22) comprises at least one inertial sensor, preferably comprising at least one motion sensor and at least one rotation sensor, and/or a position error sensor and/or a torque sensor.

13. The linear motor system of any of claims 10 to 12, wherein the vibration sensor (22) is potted with epoxy resin and fixed to the movable member (2).

14. A forming assembly (7) configured to form a plurality of objects (80) and comprising a linear motor system according to any of claims 10 to 13, the forming assembly (7) comprising:
- a pair of endless tracks (1),
- a pair of movable members (2), each one of which movably coupled to, and cyclically movable along, one respective track (1),
- a processing unit (3) configured to position the movable member at a monitoring region (M) of the track (1) and apply vibration to the movable member (2),
wherein the movable member (2) comprises a vibration sensor (22) configured to detect a response (R) of the movable member (2) to the vibration applied thereon.

15. The forming assembly (7) of claim 14, comprising a packaging assembly configured to form and seal a plurality of packs (80) containing a pourable product starting from a tube (8) of packaging material, the packaging assembly comprising a pair of endless tracks (1) between which said tube (8) is fed along a straight advancement direction (X), and
wherein each movable member (2) of said pair of movable members (2) comprises a respective forming unit (202) and a respective sealing unit (204) linearly movable towards said tube (8), transversally to said advancement direction (X), to cyclically cooperate in contact with successive tube portions (82), so as to form and seal at least corresponding pack portions of respective packs (80), respectively.

## Patentansprüche

1. Verfahren zum Überwachen eines Zustands eines beweglichen Elements (2) in einem Linearmotorsystem, umfassend eine Schiene (1) und mindestens ein bewegliches Element (2), das mit der Schiene (1) gekoppelt und dazu ausgelegt ist, sich entlang der Schiene (1) zu bewegen, wobei das bewegliche Element (2) einen Schwingungssensor (22) darauf umfasst, wobei das Verfahren Folgendes umfasst:
- Positionieren des beweglichen Elements (2) in einem Überwachungsbereich (M) der Schiene (1),
- Aufbringen einer Schwingung auf das bewegliche Element (2) und
- Erfassen einer Reaktion (R) des beweglichen Elements (2) auf die Schwingung mittels des Schwingungssensors (22), wobei das Verfahren **dadurch gekennzeichnet ist, dass** der Schritt des Aufbringens einer Schwingung auf das bewegliche Element (2) das Aufbringen eines festgelegten Bewegungsprofils (S1, S2) auf das bewegliche Element (2) umfasst.

2. Verfahren nach Anspruch 1, Folgendes umfassend:
- Vergleichen der erfassten Reaktion (R) mit einem festgelegten Schwingungsmuster und
- Prüfen, ob sich die Reaktion (R) vom festgelegten Schwingungsmuster unterscheidet und
- falls die Reaktion (R) im Wesentlichen dem festgelegten Schwingungsmuster entspricht, Fortsetzen des Betriebs des beweglichen Elements (2).

3. Verfahren nach Anspruch 2, falls die Reaktion (R) nicht im Wesentlichen dem festgelegten Schwingungsmuster entspricht, umfassend das Senden einer Warnung an eine Benutzerschnittstelle und/oder Verhindern des Fortsetzens des Betriebs des beweglichen Elements (2).

4. Verfahren nach einem der Ansprüche 1 bis 3, wobei das festgelegte Bewegungsprofil (S1, S2) ein sinusförmiges Bewegungsprofil (S1, S2) ist.

5. Verfahren nach einem der vorstehenden Ansprüche, wobei der Überwachungsbereich (M) einen linearen Bereich der Schiene (1) umfasst, der sich in eine Richtung senkrecht zu einer Erdbeschleunigungsrichtung (G) erstreckt.

6. Verfahren nach einem der vorstehenden Ansprüche, umfassend das Aufbringen mehrerer Schwingungen auf das bewegliche Element (2), wobei die Schwingungen verschiedene Frequenzen (f1, f2), vorzugsweise zwischen 0,5 Hz und 200 Hz, aufweisen.

7. Verfahren nach einem der vorstehenden Ansprüche, umfassend das periodische Unterbrechen des Betriebs des Linearmotorsystems, um den Zustand des beweglichen Elements (2) zu überwachen.

8. Verfahren nach einem der vorstehenden Ansprüche, umfassend das Kalibrieren des beweglichen Elements (2) bei der Installation durch das Aufbringen mindestens einer Schwingung auf das bewegliche Element (2), um ein festgelegtes Schwingungsmuster zu erzeugen.

9. Computerprogrammprodukt, das in den Speicher mindestens einer elektronischen Steuereinheit (3, 22) ladbar ist und Softwarecodeabschnitte zum Ausführen der Schritte des Verfahrens nach einem der Ansprüche 1 bis 8 umfasst.

10. Linearmotorsystem, Folgendes umfassend:
- eine Schiene (1),
- mindestens ein bewegliches Element (2), das mit der Schiene (1) gekoppelt und dazu ausgelegt ist, sich entlang der Schiene (1) zu bewegen,
- eine Verarbeitungseinheit (3), die dazu ausgelegt ist, das bewegliche Element in einem Überwachungsbereich (M) der Schiene (1) zu positionieren und eine Schwingung auf das bewegliche Element (2) aufzubringen, wobei die aufgebrachte Schwingung ein festgelegtes Bewegungsprofil (S1, S2) umfasst,
wobei das bewegliche Element (2) einen Schwingungssensor (22) umfasst, der dazu ausgelegt ist, eine Reaktion des beweglichen Elements auf die darauf aufgebrachte Schwingung zu erfassen.

11. Linearmotorsystem nach Anspruch 10, wobei der Überwachungsbereich (M) einen, vorzugsweise linearen, Bereich umfasst, in dem das bewegliche Element (2) liegen würde, wenn keine Kraft vom Linearmotorsystem auf das bewegliche Element (2) aufgebracht werden würde.

12. Linearmotorsystem nach Anspruch 10 oder Anspruch 11, wobei der Schwingungssensor (22) mindestens einen Trägheitssensor, der vorzugsweise mindestens einen Bewegungssensor und mindestens einen Rotationssensor umfasst, und/oder einen Positionsfehlersensor und/oder einen Drehmomentsensor umfasst.

13. Linearmotorsystem nach einem der Ansprüche 10 bis 12, wobei der Schwingungssensor (22) mit Epoxidharz vergossen und am beweglichen Element (2) fixiert ist.

14. Formungsanordnung (7), die dazu ausgelegt ist, mehrere Objekte (80) zu formen, und ein Linearmotorsystem nach einem der Ansprüche 10 bis 13 umfasst, wobei die Formungsanordnung (7) Folgendes umfasst:
- ein Paar Endlosschienen (1),
- ein Paar bewegliche Elemente (2), die jeweils beweglich mit einer jeweiligen Schiene (1) gekoppelt und zyklisch daran entlang beweglich sind,
- eine Verarbeitungseinheit (3), die dazu ausgelegt ist, das bewegliche Element in einem Überwachungsbereich (M) der Schiene (1) zu positionieren und eine Schwingung auf das bewegliche Element (2) aufzubringen,
wobei das bewegliche Element (2) einen Schwingungssensor (22) umfasst, der dazu ausgelegt ist, eine Reaktion (R) des beweglichen Elements (2) auf die darauf aufgebrachte Schwingung zu erfassen.

15. Formungsanordnung (7) nach Anspruch 14, umfassend eine Verpackungsanordnung, die dazu ausgelegt ist, mehrere Verpackungen (80), die ein gießfähiges Produkt enthalten und aus einem Schlauch (8) aus Verpackungsmaterial entstehen, zu formen und zu verschweißen, wobei die Verpackungsanordnung ein Paar Endlosschienen (1) umfasst, zwischen denen der Schlauch (8) entlang einer geraden Förderrichtung (X) gespeist wird, und
wobei jedes bewegliche Element (2) des Paars bewegliche Elemente (2) eine jeweilige Formungseinheit (202) und eine jeweilige Schweißeinheit (204) umfasst, die zum Schlauch (8) hin quer zur Förderrichtung (X) linear beweglich sind, um in Kontakt mit aufeinanderfolgenden Schlauchabschnitten (82) zyklisch zusammenzuwirken, um zumindest zugehörige Verpackungsabschnitte jeweiliger Verpackungen (80) zu formen bzw. zu verschweißen.

## Revendications

1. Procédé de contrôle de l'état d'un élément mobile (2) dans un système de moteur linéaire comprenant une voie (1) et au moins un élément mobile (2) accouplé à la voie (1) et conçu pour se déplacer le long de ladite voie (1), l'élément mobile (2) étant pourvu d'un capteur de vibration (22), le procédé comprenant :
- placer l'élément mobile (2) au niveau d'une région de contrôle (M) de la voie (1),
- appliquer une vibration à l'élément mobile (2), et
- détecter une réponse (R) de l'élément mobile (2) à la vibration au moyen du capteur de vibration (22), le procédé étant **caractérisé en ce que** l'étape d'application d'une vibration à l'élément mobile (2) comprend l'application d'un profil de mouvement prédéterminé (S1, S2) à l'élément mobile (2).

2. Procédé selon la revendication **1,** comprenant :
- comparer la réponse (R) détectée à un modèle de vibration prédéterminé, et
- vérifier si la réponse (R) diffère du modèle de vibration prédéterminé, et
- si la réponse (R) correspond sensiblement au modèle de vibration prédéterminé, remettre l'élément mobile (2) en fonctionnement.

3. Procédé selon la revendication 2, comprenant, si la réponse (R) ne correspond pas sensiblement au modèle de vibration prédéterminé, le fait de transmettre une alerte à une interface utilisateur et/ou le fait d'empêcher la remise en fonctionnement de l'élément mobile (2).

4. Procédé selon l'une quelconque des revendications 1 à 3, dans lequel le profil de mouvement prédéterminé (S1, S2) est un profil de mouvement sinusoïdal (S1, S2).

5. Procédé selon l'une quelconque des revendications précédentes, dans lequel la région de contrôle (M) comprend une région linéaire de la voie (1) s'étendant dans une direction perpendiculaire à une direction d'accélération due à la pesanteur (G).

6. Procédé selon l'une quelconque des revendications précédentes, comprenant le fait d'appliquer une pluralité de vibrations à l'élément mobile (2), les vibrations présentant différentes fréquences (f1, f2), de préférence entre 0,5 Hz et 200 Hz.

7. Procédé selon l'une quelconque des revendications précédentes, comprenant le fait d'interrompre périodiquement le fonctionnement du système de moteur linéaire pour contrôler l'état de l'élément mobile (2).

8. Procédé selon l'une quelconque des revendications précédentes, comprenant le fait d'étalonner l'élément mobile (2) lors de l'installation en appliquant au moins une vibration à l'élément mobile (2) afin de générer le modèle de vibration prédéterminé.

9. Produit-programme informatique propre à être chargé dans la mémoire d'au moins une unité de commande électronique (3, 22) et comprenant des parties de code de logiciel pour l'exécution des étapes du procédé selon l'une quelconque des revendications 1 à 8.

10. Système de moteur linéaire, comprenant :
- une voie (1),
- au moins un élément mobile (2) accouplé à la voie (1) et conçu pour se déplacer le long de ladite voie (1),
- une unité de traitement (3) conçue pour placer l'élément mobile au niveau d'une région de contrôle (M) de la voie (1) et appliquer une vibration à l'élément mobile (2), la vibration appliquée comprenant un profil de mouvement prédéterminé (S1, S2),
dans lequel l'élément mobile (2) comprend un capteur de vibration (22) conçu pour détecter une réponse de l'élément mobile à la vibration appliquée à celui-ci.

11. Système de moteur linéaire selon la revendication 10, dans lequel la région de contrôle (M) comprend une région, de préférence linéaire, où l'élément mobile (2) serait situé si aucune force n'était appliquée à l'élément mobile (2) par le système de moteur linéaire.

12. Système de moteur linéaire selon la revendication 10 ou la revendication 11, dans lequel le capteur de vibration (22) comprend au moins un capteur inertiel, de préférence comprenant au moins un capteur de mouvement et au moins un capteur de rotation, et/ou un capteur d'erreur de position et/ou un capteur de couple.

13. Système de moteur linéaire selon l'une quelconque des revendications 10 à 12, dans lequel le capteur de vibration (22) est enrobé de résine époxyde et fixé à l'élément mobile (2).

14. Ensemble de formation (7) conçu pour former une pluralité d'objets (80) et comprenant un système de moteur linéaire selon l'une quelconque des revendications 10 à 13, l'ensemble de formation (7) comprenant :
- une paire de voies sans fin (1),
- une paire d'éléments mobiles (2), dont chacun est accouplé de manière mobile à une voie (1) respective et propre à être déplacé cycliquement le long de celle-ci,
- une unité de traitement (3) conçue pour placer l'élément mobile au niveau d'une région de contrôle (M) de la voie (1) et appliquer une vibration à l'élément mobile (2),
dans lequel l'élément mobile (2) comprend un capteur de vibration (22) conçu pour détecter une réponse (R) de l'élément mobile (2) à la vibration appliquée à celui-ci.

15. Ensemble de formation (7) selon la revendication 14, comprenant un ensemble d'emballage conçu pour former et sceller une pluralité d'unités d'emballage (80), contenant un produit versable, à partir d'un tube (8) de matériau d'emballage, l'ensemble d'emballage comprenant une paire de voies sans fin (1) entre lesquelles ledit tube (8) est acheminé le long d'une direction d'avance rectiligne (X), et
dans lequel chaque élément mobile (2) de ladite paire d'éléments mobiles (2) comprend une unité de formation (202) respective et une unité de scellage (204) respective déplaçables linéairement en direction dudit tube (8), transversalement à ladite direction d'avance (X), afin de coopérer cycliquement en contact avec des segments de tube (82) successifs, de façon à former et sceller, respectivement, au moins des parties d'unité d'emballage correspondantes d'unités d'emballage (80) respectives.
